# EUROPEAN PATENT APPLICATION

(11) **EP 4 737 219 A1**
(43) Date of publication of application: **06.05.2026**
(21) Application number: 24853676.5
(22) Date of filing: 09.08.2024
(51) Int. Cl.: B60R 11/00

(54) **VEHICLE, LASER RADAR MOUNT AND MOUNTING STRUCTURES THEREOF**

(30) Priority: 11.08.2023 CN 202311007704
(71) Applicant: Fuyao Glass Industry Group Co., Ltd., Fuqing, Fujian 350300 (CN)
(72) Inventor: WANG, Wenjuan, Fuqing, Fujian 350300 (CN); YANG, Weipeng, Fuqing, Fujian 350300 (CN); LI, Xueyou, Fuqing, Fujian 350300 (CN); ZHAN, Maorong, Fuqing, Fujian 350300 (CN); LIN, Weida, Fuqing, Fujian 350300 (CN); WANG, Li, Fuqing, Fujian 350300 (CN)
(74) Representative: Herrero & Asociados, S.L.
(86) International application number: PCT/CN2024/110908
(87) International publication number: WO 2025/036266

(57) **Abstract**

The present application relates to a vehicle, a laser radar mount and mounting structures (10) thereof. The mounting structures (10) of the laser radar mount comprise: rigid support portions (11), elastic support portions (12), and first connecting members (13). The rigid support portions (11) are provided on a mount body (20). The elastic support portions (12) are fixedly connected to the rigid support portions (11). The first connecting members (13) are connected to a laser radar (30), and the first connecting members (13) are embedded in the elastic support portions (12). Since the first connecting members (13) are connected to the rigid support portions (11) by means of the elastic support portions (12), the vibration reduction and noise reduction effect is achieved. In addition, since the first connecting members (13) are embedded in the elastic support portions (12), and the elastic support portions (12) are fixedly connected to the rigid support portions (11), the anti-torsional function can also be achieved, so that the laser radar (30) has good mounting stability on the laser radar mount.

## Description

### CROSS REFERENCES TO RELATED APPLICATION

This application claims priority to Chinese Patent Application No. 2023110077047, filed on August 11, 2023, entitled "Vehicle, Laser Radar Mounting Bracket and Mounting Structure Thereof", the entire contents of which are incorporated herein by reference.

### TECHNICAL FIELD

The present invention relates to the field of laser radar mounting technology, and more particularly to a vehicle, a laser radar mounting bracket, and a mounting structure thereof.

### BACKGROUND

With the rapid development of autonomous driving technology, according to the "Classification of Driving Automation for Automobiles" standard, autonomous driving levels are classified into L0 (emergency assistance), L1 (partial driving assistance), L2 (combined driving assistance), L3 (conditional autonomous driving), L4 (highly automated driving), and L5 (fully automated driving). Currently, the industry trend is that vehicles at Level L2 and above are equipped with a plurality of sensors such as cameras and laser radar (LiDAR).

Laser radar scans the surrounding environment by rapidly and repeatedly emitting laser beams to obtain "point cloud" data reflecting the shape, the position, and the movement of one or more objects in the surrounding environment. Laser radar used in vehicles emits laser having wavelengths of 905nm and 1550nm. The advantage of lasers is their focusing, preventing dispersion over long distances. However, this makes them unable to bypass obstacles and they suffer significant interference, even malfunctioning, in rain, fog, or sandstorms. Therefore, the market trend and demand is to fully integrate externally mounted laser radar into the interior of the vehicle, particularly onto an inner surface of a front window glass.

### SUMMARY

According to various embodiments of the present invention, the present invention provides a vehicle, a laser radar mounting bracket, and a mounting structure thereof.

A mounting structure of a laser radar mounting bracket includes a rigid support portion, an elastic support portion and a first connecting member.

The rigid support portion is configured to be provided on a bracket body.

The elastic support portion is fixedly connected to the rigid support portion.

The first connecting member is configured to be connected to a laser radar, and the first connecting member is embedded in the elastic support portion.

In one of the embodiments, an outer wall of the first connecting member is provided with a first anti-slip portion. The elastic support portion is arranged surrounding the outer wall of the first connecting member, and an inner wall of the elastic support portion is provided with a second anti-slip portion engaged with the first anti-slip portion.

In one of the embodiments, the first connecting member is provided with a first anti-detachment portion, and the first anti-detachment portion is arranged surrounding an outer wall of the first connecting member.

In one of the embodiments, the mounting structure further includes a second connecting member. The second connecting member is embedded in the elastic support portion and is spaced apart from the first connecting member. The first connecting member, the second connecting member, and the elastic support portion are integrally injection molded, and the elastic support portion is connected to the rigid support portion via the second connecting member.

In one of the embodiments, the rigid support portion is provided with a first mounting hole and a third connecting member embedded in the first mounting hole, and the third connecting member is detachably connected to the second connecting member; or, the second connecting member is embedded in the rigid support portion and integrally injection molded with the rigid support portion.

In one of the embodiments, the elastic support portion includes a first mounting portion and a second mounting portion connected to the first mounting portion, the first connecting member is embedded in the first mounting portion, and the second mounting portion is embedded in the rigid support portion.

In one of the embodiments, an inner wall of the rigid support portion is provided with a positioning plate, the positioning plate is provided with at least one glue injection hole, and the positioning plate is embedded and fixed in the second mounting portion.

In one of the embodiments, a plurality of glue injection holes are provided, and the plurality of glue injection holes are arranged sequentially and spaced apart around a central axis of the rigid support portion.

In one of the embodiments, the positioning plate is provided with a protrusion portion, an outer wall of the protrusion portion is provided with a third anti-slip portion, the protrusion portion is embedded in the second mounting portion, and the second mounting portion is provided with a fourth anti-slip portion corresponding to the third anti-slip portion.

In one of the embodiments, the elastic support portion, the first connecting member, and the rigid support portion are integrally injection molded.

In one of the embodiments, an outer wall of the second mounting portion is provided with a fifth anti-slip portion, and an inner wall of the rigid support portion is provided with a sixth anti-slip portion corresponding to the fifth anti-slip portion.

In one of the embodiments, the elastic support portion is made of natural rubber, and a hardness of the natural rubber is in a range from 55HRC to 70HRC; and/or, the rigid support portion is made of material capable of avoiding a modal frequency of 200Hz to 400Hz.

A laser radar mounting bracket includes at least one of the aforementioned mounting structures, and further includes the bracket body. The rigid support portion is provided on the bracket body.

A vehicle includes the aforementioned laser radar mounting bracket, and further includes a laser radar and a window glass. The laser radar mounting bracket is mounted on an inner side surface of the window glass, the laser radar is mounted on the laser radar mounting bracket, and the laser radar is connected to the mounting structure.

In one of the embodiments, at least three mounting structures are provided, and the laser radar is connected to each of the mounting structures respectively. An interval space is provided between the laser radar and a region of the laser radar mounting bracket other than the mounting structure.

In one of the embodiments, the laser radar includes an abutting portion and a locking member configured to lock and fix the abutting portion to the first connecting member.

In one of the embodiments, the abutting portion is provided on a side portion of the laser radar. The abutting portion includes an abutting bottom wall, the abutting bottom wall is provided with a second mounting hole, the locking member extends through the second mounting hole and is connected to the first connecting member, and a top end surface of the first connecting member is attached to the abutting bottom wall.

In one of the embodiments, the abutting portion further includes an abutting side wall connected to the abutting bottom wall. The abutting side wall is provided with at least one first limiting member and at least one second limiting portion, and the first limiting member and the second limiting portion abut against an outer wall of the elastic support portion respectively.

In one of the embodiments, the first limiting member and the second limiting portion are limiting ribs, limiting protrusions, or limiting blocks provided on the abutting side wall.

In one of the embodiments, a plurality of abutting portions are disposed on opposite sides of the laser radar respectively. At least two abutting portions are located on one side of the laser radar, and at least one abutting portion is located on another side of the laser radar.

In one of the embodiments, the vehicle further includes a protective cover provided on the bracket body. The anti-slip cover is provided outside the laser radar, and a vibration damping pad is provided at a connection portion between the protective cover and the bracket body.

The details of one or more embodiments of the present invention are set forth in the accompanying drawings and the description below. Other features, objects and advantages of the present invention will become apparent from the description, drawings and claims.

### BRIEF DESCRIPTION OF THE DRAWINGS

To illustrate the technical solutions in the embodiments of the present application more clearly, the following briefly describes the figures used in the embodiments. Obviously, the figures described below represent only some embodiments of the present application. Persons skilled in the art can derive other figures based on these figures without inventive effort.
FIG. 1 is a schematic view of a laser radar mounted on a laser radar mounting bracket according to an embodiment of the present invention.
FIG. 2 is a cross-sectional view of the laser radar mounted on the laser radar mounting bracket according to an embodiment of the present invention.
FIG. 3 is an enlarged schematic view of portion A in FIG. 2.
FIG. 4 is an enlarged schematic view of portion B in FIG. 2.
FIG. 5 is a schematic view of a mounting structure of the laser radar mounting bracket according to an embodiment of the present invention.
FIG. 6 is a schematic view of the mounting structure of the laser radar mounting bracket according to another embodiment of the present invention.
FIG. 7 is a cross-sectional view of FIG. 6 along line C-C.
FIG. 8 is a schematic view of the mounting structure of the laser radar mounting bracket according to yet another embodiment of the present invention.
FIG. 9 is a cross-sectional view of FIG. 8 along line D-D.
FIG. 10 is a schematic view of a rigid support portion in the structure shown in FIG. 8.
FIG. 11 is a schematic view of a first connecting member in the structure shown in FIG. 8.
FIG. 12 is a schematic view from one perspective showing the cooperation between the laser radar and the mounting structure according to an embodiment of the present invention.
FIG. 13 is a schematic view from one perspective showing the laser radar according to another embodiment of the present invention.
FIG. 14 is a schematic view showing the laser radar mounting bracket with a protective cover according to an embodiment of the present invention.
FIG. 15 is a cross-sectional view of FIG. 14 along line E-E.

Description of the Reference Numerals:
10: mounting structure; 11: rigid support portion; 111: first mounting hole; 112: positioning plate; 1121: glue injection hole; 1122: protrusion portion; 113: sixth anti-slip portion; 12: elastic support portion; 121: second anti-slip portion; 122: first mounting portion; 123: second mounting portion; 1231: fifth anti-slip portion; 13: first connecting member; 131: first anti-slip portion; 132: first anti-detachment portion; 14: second connecting member; 141: head portion; 142: rod portion; 15: third connecting member; 20: bracket body; 21: first engaging portion; 30: laser radar; 31: abutting portion; 311: abutting bottom wall; 3111: second mounting hole; 312: abutting side wall; 3121: first limiting member; 3122: second limiting member; 32: locking member; 40: protective cover; 41: second limiting portion; 50: vibration damping pad:

### DETAILED DESCRIPTION OF THE EMBODIMENTS

In order to make the aforementioned objects, features and advantages of the present invention more clearly understood, the specific embodiments of the present invention will be described in detail below with reference to the accompanying drawings. In the following description, numerous specific details are set forth in order to provide a thorough understanding of the present invention. However, the present invention can be implemented in many other ways different from those described herein, and those skilled in the art can make similar improvements without departing from the connotation of the present invention. Therefore, the present invention is not limited by the specific embodiments disclosed below.

In the related technology, integrating the laser radar mounted on the exterior of the vehicle into an interior surface of a front window glass encounters numerous technical challenges. The inventors have discovered that this problem arises because conventional methods involve directly mounting the laser radar onto a conventional windshield glass camera bracket. Compared to a vehicle-mounted camera, the laser radar is larger in size and weight, resulting in poor mounting stability of the laser radar. When the laser radar is operating, a galvanometer mechanism built in the laser radar vibrates at high frequency, emitting high-frequency point cloud waves. This vibrational energy is directly transmitted to the front windshield camera bracket, causing significant resonance noise.

For the reasons mentioned above, the present invention provides a vehicle, a laser radar mounting bracket and a mounting structure thereof, which can effectively reduce vibration, improve anti-torsional strength and reduce noise.

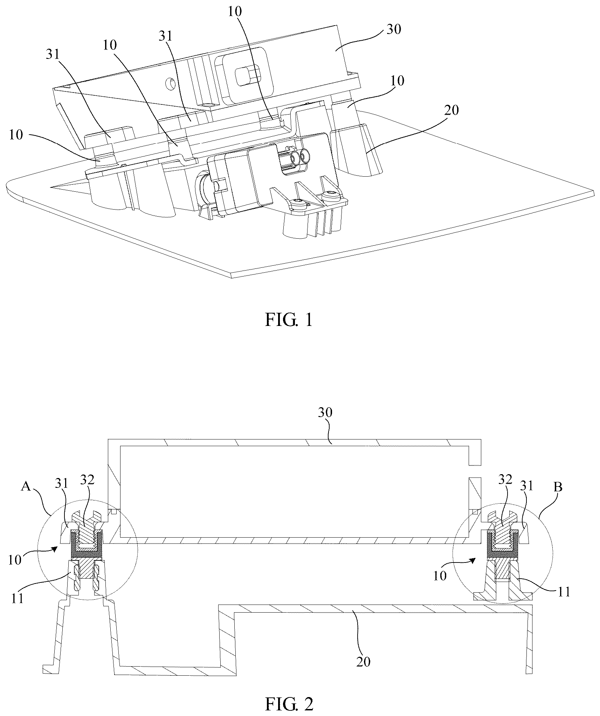

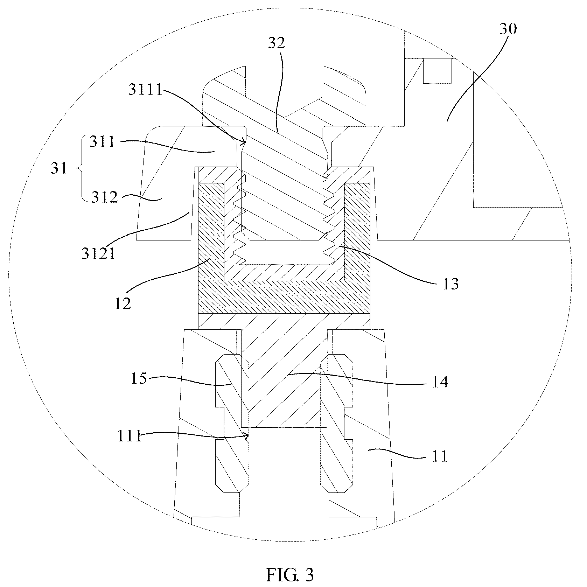

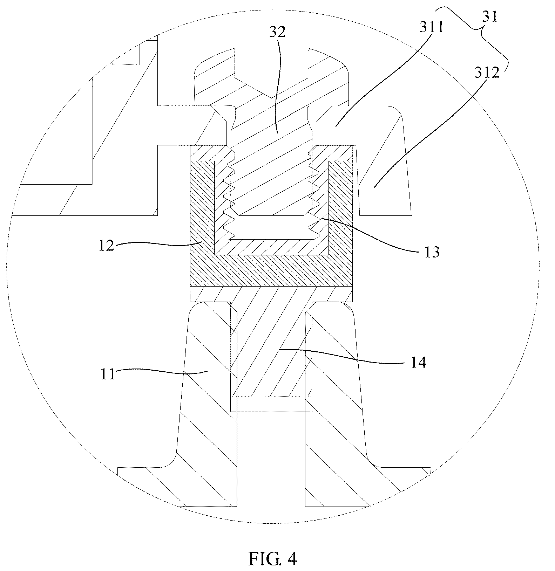

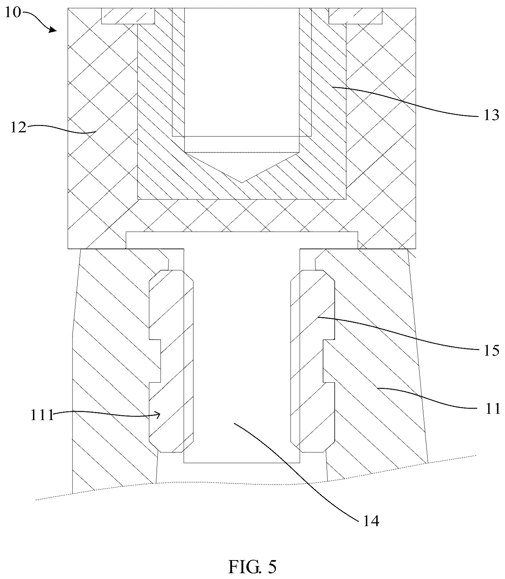

Referring to FIG. 1 to FIG. 5, FIG. 1 is a schematic view of a laser radar 30 mounted on a laser radar mounting bracket according to an embodiment of the present invention. FIG. 2 is a cross-sectional view of the laser radar 30 mounted on the laser radar mounting bracket according to an embodiment of the present invention. FIG. 3 is an enlarged schematic view of portion A in FIG. 2. FIG. 4 is an enlarged schematic view of portion B in FIG. 2. FIG. 5 is a schematic view of a mounting structure 10 of the laser radar mounting bracket according to an embodiment of the present invention. An embodiment of the present invention provides the mounting structure 10 of the laser radar mounting bracket. The mounting structure 10 of the laser radar mounting bracket includes a rigid support portion 11, an elastic support portion 12, and a first connecting member 13. The rigid support portion 11 is configured to be mounted on a bracket body 20. The elastic support portion 12 is fixedly connected to the rigid support portion 11. The first connecting member 13 is configured to be connected to the laser radar 30 and is embedded in the elastic support portion 12.

In the aforementioned mounting structure 10 of the laser radar mounting bracket, during use, the first connecting member 13 is connected to the rigid support portion 11 via the elastic support portion 12, so as to achieve vibration reduction and noise reduction effect. Furthermore, since the first connecting member 13 and the elastic support portion 12 are embedded in the elastic support portion 12, and the elastic support portion 12 is fixedly connected to the rigid support portion 11, an anti-torsional function is achieved. This results in good mounting stability of the laser radar 30 on the laser radar mounting bracket, meeting the requirement that the vibration noise level of the laser radar mounted in the vehicle cabin should be ≤30dB.

Referring to FIG. 3 and FIG. 5, in some embodiments, the first connecting member 13 includes, but is not limited to, various mechanical parts such as nuts, screws, bolts, studs, pins, rivets, and engaging members. In addition, the first connecting member 13 can be either a metal part or a non-metal part, which can be flexibly adjusted and set according to actual needs specifically, and is not limited here.

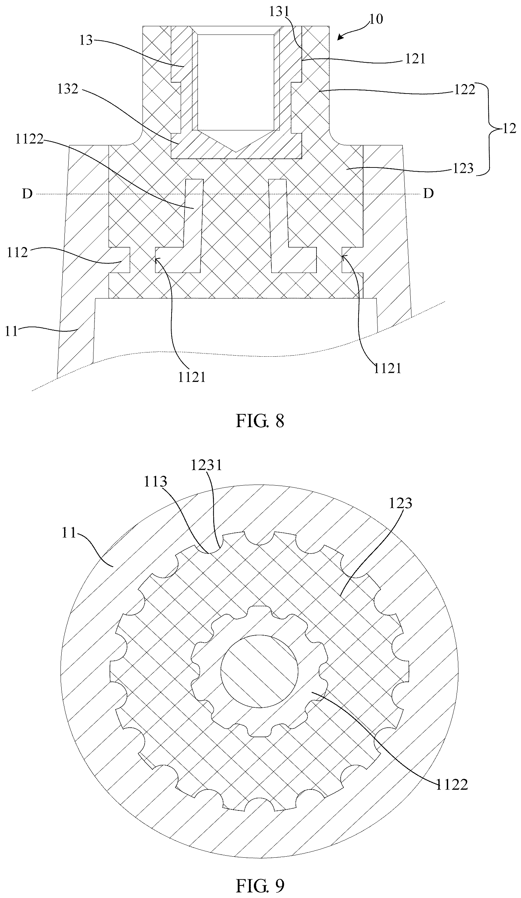

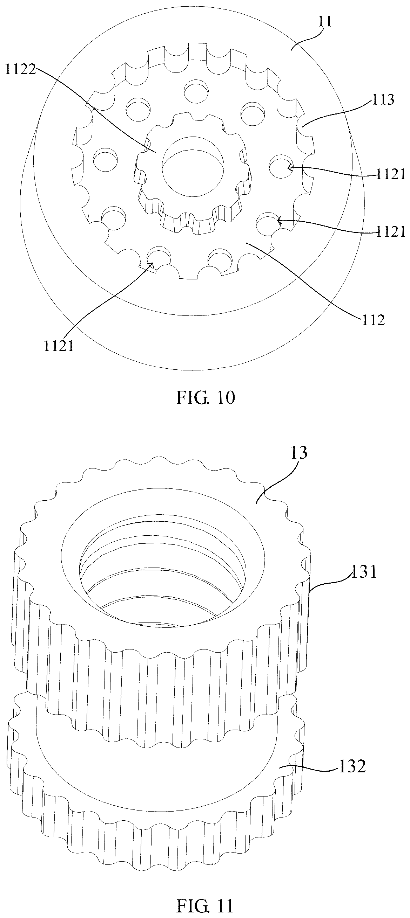

Referring to FIG. 8 to FIG. 11, FIG. 8 is a schematic view of the mounting structure 10 of the laser radar mounting bracket according to yet another embodiment of the present invention. FIG. 9 is a cross-sectional view of FIG. 8 along line D-D. FIG. 10 is a schematic view of a rigid support portion 11 in the structure shown in FIG. 8. FIG. 11 is a schematic view of a first connecting member 13 in the structure shown in FIG. 8. In some embodiments, an outer wall of the first connecting member 13 is provided with a first anti-slip portion 131. The elastic support portion 12 is arranged surrounding the outer wall of the first connecting member 13, and an inner wall of the elastic support portion 12 is provided with a second anti-slip portion 121 engaged with the first anti-slip portion 131. Specifically, since the outer wall of the first connecting member 13 is provided with the first anti-slip portion 131, while the elastic support portion 12 is injection molded onto the exterior of the connecting member using an elastic material, the second anti-slip portion 121 engaged with the first anti-slip portion 131 can be formed on the inner wall of the elastic support portion 12. As such, when the first anti-slip portion 131 and the second anti-slip portion 121 cooperate with each other, the anti-torsional ability of the first connecting member 13 is improved, that is, the anti-torsional ability of the laser radar 30 is improved, and the mounting stability of the laser radar 30 on the laser radar mounting bracket is improved.

In some embodiments, the first anti-slip portion 131 and the second anti-slip portion 121 can also be mounted and cooperated using pre-manufactured, mutually matching shapes to achieve the purpose of improving the anti-torsional ability.

Optionally, the elastic support portion 12 and the first connecting member 13 are specifically connected, for example, by adhesive bonding. Specifically, an adhesive material is coated on a contact surface of the first anti-slip portion 131 and the second anti-slip portion 121, thereby achieving a stable connection and fixation between the first anti-slip portion 131 and the second anti-slip portion 121 and improving the anti-torsional ability of the first connecting member 13.

Optionally, the first anti-slip portion 131 may include, but is not limited to, a plurality of regular structures such as serrations, protrusions, and recesses, or other irregular structures, sequentially arranged around an outer wall of the first connecting member 13.

As some optional solutions, the outer wall of the first connecting member 13 may be configured as a smooth surface, and the inner wall of the elastic support portion 12 may be configured as a smooth surface accordingly. In this case, the anti-torsional ability is achieved based on the adhesive force between the outer wall material of the first connecting member 13 and the inner wall material of the elastic support portion 12 injection-molded onto the exterior of the outer wall material of the first connecting member 13.

Referring to FIG. 8 to FIG. 11, in some embodiments, the first connecting member 13 is provided with a first anti-detachment portion 132. The first anti-detachment portion 132 is arranged surrounding the outer wall of the first connecting member 13. Thus, the first anti-detachment portion 132 enables a relatively firm combination of the first connecting member 13 and the elastic support portion 12, effectively preventing the laser radar 30 from detaching from the laser radar mounting bracket when driven by external forces, thereby improving mounting stability.

Referring to FIG. 8 to FIG. 11, in some embodiments, the first anti-detachment portion 132 includes, but is not limited to, various protruding structures such as flanges, ribs, and protrusions provided on the outer wall of the first connecting member 13. Furthermore, the first anti-detachment portion 132 can be flexibly adjusted and positioned at any location on the outer wall of the first connecting member 13 according to actual needs, such as at any end, middle portion, or other parts of the first connecting member 13. As an optional solution, the first anti-detachment portion 132 on the outer wall of the first connecting member 13 can be omitted.

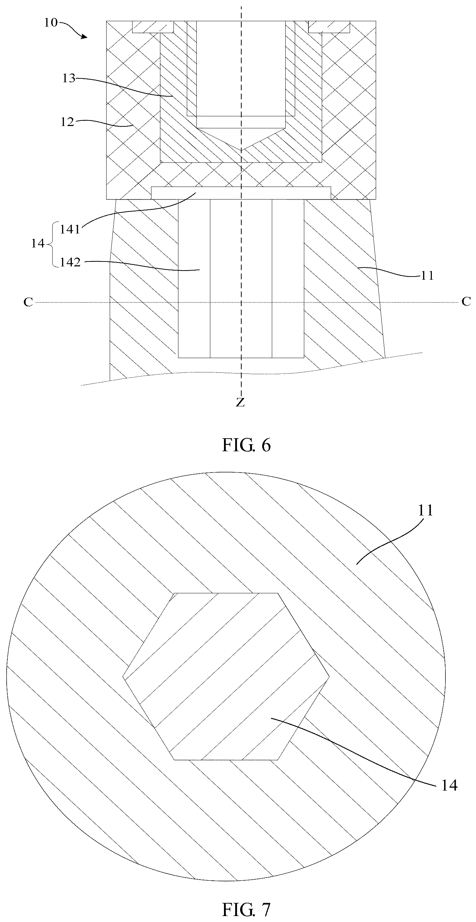

Referring to FIG. 3 to FIG. 6, in some embodiments, the mounting structure 10 further includes a second connecting member 14. The second connecting member 14 is embedded in the elastic support portion 12 and is spaced apart from the first connecting member 13. A gap between the second connecting member 14 and the first connecting member 13 is filled with an elastic material of the elastic support portion 12, such that the first connecting member 13 and the second connecting member 14 are not in direct physical contact, preventing the vibration energy of the laser radar 30 from being directly transmitted to the second connecting member 14 via the first connecting member 13, thus achieving vibration reduction and noise reduction effect. Furthermore, the first connecting member 13, the second connecting member 14, and the elastic support portion 12 are integrally injection molded, and the elastic support portion 12 is connected to the rigid support portion 11 via the second connecting member 14. Thus, the second connecting member 14 enables the elastic support portion 12 and the rigid support portion 11 to be effectively connected together.

The specific structural form of the second connecting member 14 is similar to that of the first connecting member 13, and will not be described further herein.

Referring to FIG. 3 and FIG. 5, in an embodiment, the rigid support portion 11 is provided with a first mounting hole 111, and a third connecting member 15 is embedded in the first mounting hole 111. The third connecting member 15 is detachably connected to the second connecting member 14.

The specific structural form of the third connecting member 15 is similar to that of the first connecting member 13, and may include, but is not limited to, various mechanical parts such as nuts, screws, bolts, studs, pins, rivets, and engaging members. The specific selection will not be elaborated here. As a specific example, the second connecting member 14 is a screw, and the third connecting member 15 is a nut corresponding to the screw, thus facilitating the mounting and removal of the second connecting member 14 on the third connecting member 15, and simplifying replacement and maintenance.

Referring to FIG. 3 and FIG. 5, in an embodiment, the third connecting member 15 is, specifically for example, integrally injection molded with the rigid support portion 11. Furthermore, the outer wall of the third connecting member 15 is provided with an anti-slip portion, and the inner wall of the rigid support portion 11 in contact with the third connecting member 15 is provided with a corresponding anti-slip portion, such that the third connecting member 15 is securely positioned within the rigid support portion 11 and exhibits a strong anti-torsional ability. The specific form of this anti-slip portion is similar to that of the first anti-slip portion 131 in the above embodiments, and will not be described again here.

Referring to FIG. 4, FIG. 6, and FIG. 7, in another embodiment, the second connecting member 14 is embedded in the rigid support portion 11 and integrally injection molded with the rigid support portion 11. Thus, the first connecting member 13, the elastic support portion 12, the second connecting member 14, and the rigid support portion 11 are configured as an integrated structure, which not only has a good vibration reduction and noise reduction effect, but also has a strong anti-torsional ability. In the manufacturing process, the first connecting member 13, the second connecting member 14, and the elastic support portion 12 are first integrally molded to form the vibration damping structure. Then, the second connecting member 14 of the vibration damping structure and the rigid material are integrally injection molded to form the rigid support portion 11 connected to the second connecting member 14. Furthermore, the second connecting member 14 includes a head portion 141 and a rod portion 142 connected to the head portion 141. The head portion 141 is embedded and fixed within the elastic support portion 12, and the rod portion 142 is embedded and fixed within the rigid support portion 11. Both the head portion 141 and the rod portion 142 are, for example, structures extending along the axial direction Z and the respective axial cross-sections thereof can be flexibly adjusted and set according to actual needs, including but not limited to regular shapes, such as circles, ellipses, and polygons, and irregular shapes. In this example, the axial cross-section of the rod portion 142 is, for example, a regular polygon, specifically a regular hexagon, which has strong anti-torsional ability.

Referring to FIG. 8 to FIG. 11, in some embodiments, the elastic support portion 12 includes a first mounting portion 122 and a second mounting portion 123 connected to the first mounting portion 122. The first connecting member 13 is embedded in the first mounting portion 122, and the second mounting portion 123 is embedded in the rigid support portion 11. Thus, the second mounting portion 123 is embedded in and securely connected to the rigid support portion 11. The first mounting portion 122 is located outside the rigid support portion 11, thus providing a better vibration reduction and noise reduction effect when the laser radar 30 is operating.

Referring to FIG. 8 to FIG. 11, in an embodiment, the inner wall of the rigid support portion 11 is provided with a positioning plate 112, and the positioning plate 112 is provided with at least one glue injection hole 1121. The positioning plate 112 is embedded and fixed within the second mounting portion 123. Thus, since the positioning plate 112 is embedded and fixed in the second mounting portion 123 to prevent detachment, the second mounting portion 123 can be stably connected and fixed within the rigid support portion 11, making the second mounting portion 123 difficult to loosen.

Referring to FIG. 8 to FIG. 11, in an embodiment, a plurality of glue injection holes 1121 are provided, and the plurality of glue injection holes 1121 are arranged sequentially and spaced apart around the central axis of the rigid support portion 11. As such, on the one hand, a firm connection between the soft materials on both sides of the second mounting portion 123 and the rigid support portion 11 are achieved via pulling each other; on the other hand, during the injection molding process, the more glue injection holes 1121 are provided, the easier it is for the injection material to pass through the glue injection holes 1121 to fill the mold, thus ensuring that both opposite side surfaces of the positioning plate 112 have the injection material, achieving complete enclosure of the second mounting portion 123 around the positioning plate 112, improving connection stability and injection molding efficiency.

Referring to FIG. 8 to FIG. 11, in an embodiment, the positioning plate 112 is provided with a protrusion portion 1122. An outer wall of the protrusion portion 1122 is provided with a third anti-slip portion. The protrusion portion 1122 is embedded in the second mounting portion 123, and the second mounting portion 123 is provided with a fourth anti-slip portion corresponding to the third anti-slip portion. As such, the mutual cooperation action of the third anti-slip portion and the fourth anti-slip portion improves the anti-torsional ability between the elastic support portion 12 and the rigid support portion 11, ensuring that the anti-torsional ability of the connecting member is no less than 2.5 N*M. Furthermore, the increased bonding area effectively prevents the second mounting portion 123 from detaching from the rigid support portion 11. Moreover, the rigidity performance of the protrusion portion 1122 is enhanced.

Specifically, the protrusion portion 1122 is, for example, located in the middle portion of the positioning plate 112 or at other positions.

Similar to the first anti-slip portion 131, the third anti-slip portion includes, but is not limited to, various regular structures such as serrations, protrusions, and recesses or other irregular structures, sequentially arranged around the outer wall of the first connecting member 13.

Referring to FIG. 8 to FIG. 11, in an embodiment, the elastic support portion 12, the first connecting member 13, and the rigid support portion 11 are integrally injection molded.

Specifically, the elastic support portion 12 is injection molded from soft rubber, and the rigid support portion 11 is injection molded from hard rubber.

Referring to FIG. 8 to FIG. 11, in an embodiment, the elastic support portion 12 is, but is not limited to, made of rubber, specifically, natural rubber, with a hardness set in a range, for example, from 55 HRC to 70 HRC.

Specifically, the hardness of the elastic support portion 12 is configured to be in a range from 55 HRC to 70 HRC to balance the requirements for rigidity reduction and noise reduction. When the hardness of the elastic support portion 12 is less than 55 HRC, the material is too soft, the mounting support rigidity is insufficient, which fails to meet the requirement that the absolute value of the angle error of mounting and positioning the radar window should be less than 1°. When the hardness of the elastic support portion 12 exceeds 70 HRC, the excessive hardness of the material leads to insufficient vibration energy absorption, resulting in a vibration noise level exceeding 30 dB, which fails to meet the use requirements of the laser radar.

Furthermore, the rigid support portion 11 may, but is not limited to, be made of PBT material. To avoid resonance, the material selection for the rigid support portion 11 has requirement of avoiding the modal frequency, specifically, avoiding the modal frequency in a range from 200 Hz to 400 Hz. In some embodiments, the modal frequency of the rigid support portion 11 is in a range from 70 Hz to 150 Hz. In some embodiments, the modal frequency of the rigid support portion 11 is in a range from 100 Hz to 180 Hz. Within the determined hardness range of the elastic support portion 12, using the aforementioned modal frequency can control the noise level to be below 30 dB, thus meeting the requirements of the laser radar.

Referring to FIG. 8 to FIG. 11, in an embodiment, the outer wall of the second mounting portion 123 is provided with a fifth anti-slip portion 1231, and the inner wall of the rigid support portion 11 is provided with a sixth anti-slip portion 113 corresponding to the fifth anti-slip portion 1231. As such, the mutual cooperation action between the fifth anti-slip portion 1231 and the sixth anti-slip portion 113 can improve the anti-torsional ability between the elastic support portion 12 and the rigid support portion 11, ensuring that the anti-torsional ability of the connector is no less than 2.5 N*M. Furthermore, the increased bonding area effectively prevents the second mounting portion 123 from detaching from the rigid support portion 11. Additionally, the rigidity performance of both the second mounting portion 123 and the rigid support portion 11 are enhanced.

Optionally, the fifth anti-slip portion 1231 includes, but is not limited to, a plurality of various regular structures such as serrations, protrusions, and recesses or other irregular structures sequentially arranged around the outer wall of the second mounting portion 123.

Referring to FIG. 1 to FIG. 5, in an embodiment, a laser radar mounting bracket is provided, which includes at least one mounting structure 10 of any of the aforementioned embodiments, and also includes a bracket body 20, and the rigid support portion 11 is provided on the bracket body 20.

It should be noted that the "rigid support portion 11" can be "a part of the bracket body 20", that is, the "rigid support portion 11" and "other parts of the bracket body 20" can be integrally molded; or it can be a separate component that can be separated from "other parts of the bracket body 20", that is, the "rigid support portion 11" can be manufactured independently and then combined with "other parts of the bracket body 20" to form a whole.

In the aforementioned laser radar mounting bracket, during use, the first connecting member 13 is connected to the rigid support portion 11 via the elastic support portion 12, so as to achieve vibration reduction and noise reduction effect. Furthermore, since the first connecting member 13 and the elastic support portion 12 are integrally injection molded and embedded in the elastic support portion 12, and the elastic support portion 12 is fixedly connected to the rigid support portion 11, an anti-torsional function is achieved. This results in good mounting stability of the laser radar 30 on the laser radar mounting bracket.

Referring to FIG. 1, in some embodiments, a plurality of mounting structures 10 are provided, and the plurality of mounting structures 10 are all connected to the laser radar 30. The laser radar 30 and other positions of the laser radar mounting bracket have an interval, resulting in a flexible connection between the laser radar 30 and the mounting bracket, which can achieve a better vibration reduction and noise reduction effect.

Referring to FIG. 1 to FIG. 5, in an embodiment, a vehicle is provided, which includes the laser radar mounting bracket of any of the aforementioned embodiments, as well as the laser radar 30 and a window glass (not shown). The laser radar mounting bracket is mounted on an inner side surface of the window glass (i.e., a side closer to the interior of the vehicle). The laser radar 30 is mounted on the laser radar mounting bracket and is connected to the mounting structure 10.

In the aforementioned vehicle, since the first connecting member 13 is connected to the rigid support portion 11 via the elastic support portion 12, the vibration reduction and noise reduction effect can be achieved. Furthermore, since the first connecting member 13 is embedded in the elastic support portion 12, the elastic support portion 12 is fixedly connected to the rigid support portion 11, an anti-torsional function is also achieved, resulting in good mounting stability of the laser radar 30 on the laser radar mounting bracket.

The mounting surface of the vibration-damping BOSS mounting column of the bracket is designed to be level with the ground, ensuring the effective FOV of the laser radar 30. After mounting, the mounting position error of the laser radar 30 in the vehicle coordinate system should be less than 5mm, and the absolute value of the angular error should be less than 1°.

In an embodiment, the laser radar 30 faces the window glass, and the detection signals transmitted and received by the laser radar 30 pass through the window glass.

Referring to FIG. 1 to FIG. 5, in an embodiment, at least three mounting structures 10 are provided, and the laser radar 30 is connected to each of the mounting structures 10. An interval space is provided between the laser radar 30 and a region on the laser radar mounting bracket outside the mounting structures 10. Thus, the laser radar 30 is mounted on the laser radar mounting bracket via at least three mounting structures 10, and the connection manner to the laser radar mounting bracket is flexible connection, achieving better vibration reduction and noise reduction effect.

Referring to FIG. 1 to FIG. 5, in an embodiment, one side of the laser radar 30 is mounted on at least two mounting structures 10, and the other side of the laser radar 30 is mounted on at least one mounting structure 10. As such, both opposite sides of the laser radar 30 are mounted on and supported by the mounting structures 10, respectively, resulting in strong mounting stability on the laser radar mounting bracket.

Referring to FIG. 2 to FIG. 5, in an embodiment, the laser radar 30 includes an abutting portion 31 and a locking member 32 configured to lock the abutting portion 31 to the first connecting member 13.

Referring to FIG. 2 to FIG. 5, in an embodiment, the first connecting member 13 is, for example, a nut, and the locking member 32 is a bolt or a threaded rod corresponding to the nut. Furthermore, the abutting portion 31 is provided with a corresponding second mounting hole 3111 corresponding to the locking member 32. The locking member 32 extends through the second mounting hole 3111 and is connected to the first connecting member 13, thereby locking the abutting portion 31 onto the mounting structure 10.

Referring to FIG. 2 to FIG. 5, in an embodiment, the abutting portion 31 is provided on a side portion of the laser radar 30. The abutting portion 31 includes an abutting bottom wall 311, and the abutting bottom wall 311 is provided with the second mounting hole 3111. The locking member 32 extends through the second mounting hole 3111 and is connected to the first connecting member 13. A top end surface of the first connecting member 13 is attached to the abutting bottom wall 311. Thus, the top end surface of the first connecting member 13 is attached to the abutting bottom wall 311, so as to limit the laser radar 30 along the Z-axis direction. The locking member 32 extends through the second mounting hole 3111 and is connected to the first connecting member 13, such that the laser radar 30 is firmly connected to the laser radar mounting bracket, thus preventing rigid contact between the laser radar 30 and the mounting bracket, and effectively reducing vibration and noise.

Referring to FIG. 3, FIG. 12, and FIG. 13, in an embodiment, the abutting portion 31 further includes an abutting side wall 312 connected to the abutting bottom wall 311. The abutting side wall 312 is provided with at least one first limiting member 3121 and at least one second limiting portion 3122, and the first limiting member 3121 and the second limiting portion 3122 abut against the outer wall of the elastic support portion 12, respectively. Thus, the at least one first limiting member 3121 abutting against the outer wall of the elastic support portion 12 limits the laser radar 30 in the X-axis direction; the at least one second limiting portion 3122 abutting against the outer wall of the elastic support portion 12 limits the laser radar 30 in the Y-axis direction. This ensures a stable connection of the laser radar 30 to the laser radar mounting bracket, preventing rigid contact between the laser radar 30 and the laser radar mounting bracket, and effectively reducing vibration and noise.

Referring to FIG. 3, FIG. 12, and FIG. 13, in an embodiment, the first limiting member 3121 and the second limiting portion 3122 are limiting ribs, limiting protrusions, or limiting blocks provided on the abutting side wall 312.

In this embodiment, both the first limiting member 3121 and the second limiting portion 3122 are, for example, configured as limiting ribs, and the extending direction of the limiting ribs is parallel to the central axis of the rigid support portion 11.

Referring to FIG. 3, FIG. 12, and FIG. 13, in an embodiment, abutting portions 31 are provided on opposite sides of the laser radar 30, respectively. At least two abutting portions 31 are provided on one side of the laser radar 30, and at least one abutting portion 31 is provided on the other side of the laser radar 30.

Referring to FIG. 3, FIG. 12, and FIG. 13, in an embodiment, the first limiting member 3121 and the second limiting portion 3122 are provided with assembly gaps to the outer wall of the elastic support portion 12 respectively. These assembly gaps are, for example, 0.2 mm, thereby preventing assembly difficulties of the laser radar 30 on the mounting structure 10 due to manufacturing deviations.

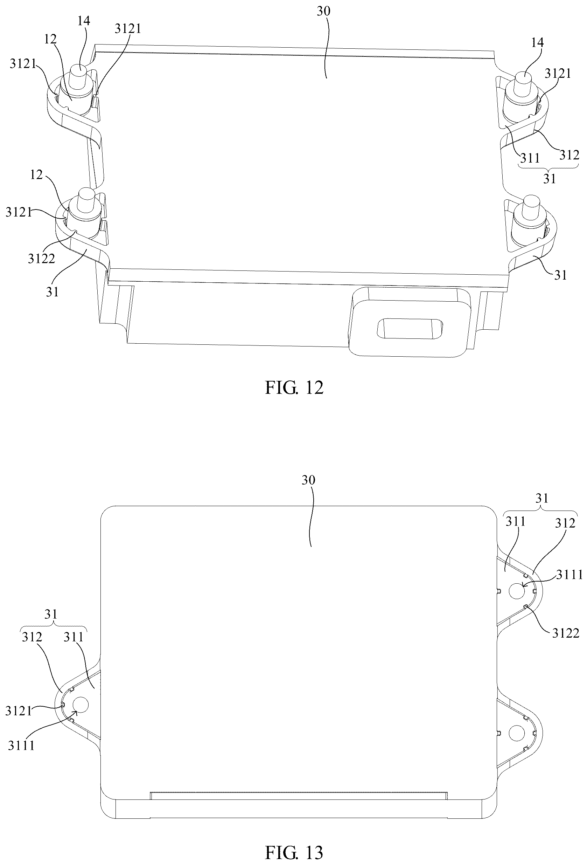

Referring to FIG. 3 and FIG. 12, in one specific embodiment, on one side of the laser radar 30, as shown on the right side in FIG. 12, the number of abutting portions 31 is, for example, two, and each abutting portion 31 has two first limiting members 3121 and two second limiting portions 3122, configured for primary positioning the laser radar 30. Specifically, the two first limiting members 3121 abut against opposite sides of the elastic support portion 12, achieving a limiting on the X-axis direction, and the two second limiting portions 3122 abut against opposite sides of the elastic support portion 12, achieving limiting on the Y-axis direction.

Referring to FIG. 3 and FIG. 13, furthermore, on the other side of the laser radar 30, as shown on the left side in FIG. 13, the number of abutting portions 31 is, for example, one or two, and each abutting portion 31 has one first limiting member 3121 and two second limiting portions 3122, configured for secondary positioning the laser radar 30. Specifically, the two second limiting portions 3122 abut against the opposite sides of the elastic support portion 12 to achieve limiting on the Y-axis direction, and one of the first limiting members 3121 abuts against the outer wall of the elastic support portion 12 to achieve compensation on the X-axis direction, absorbing the manufacturing deviation of the laser radar 30, thereby enabling the laser radar 30 to be smoothly connected to the laser radar mounting bracket.

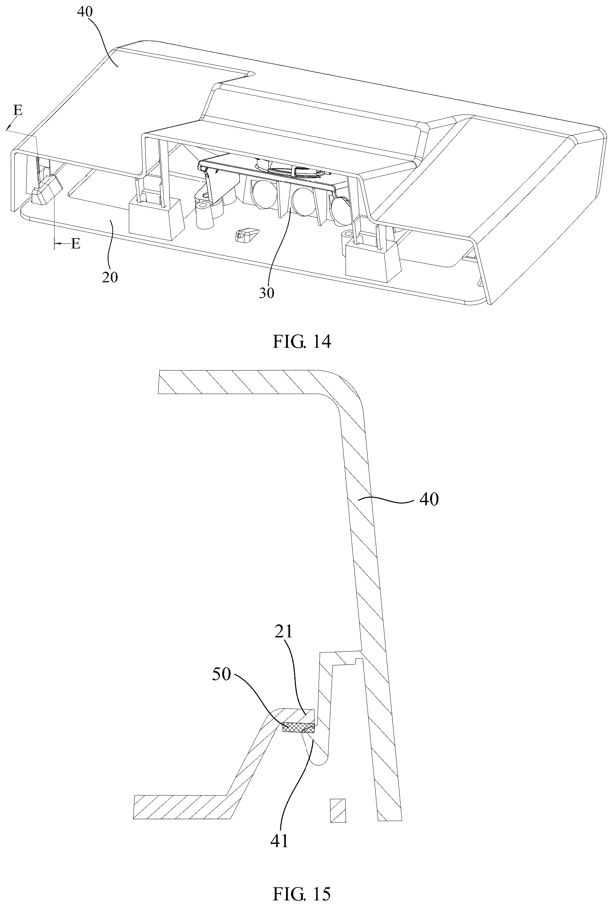

Referring to FIG. 14 and FIG. 15, in an embodiment, the vehicle further includes a protective cover 40 disposed on the bracket body 20, and the anti-slip cover is disposed outside the laser radar 30, thereby protecting the laser radar 30. A connection manner of the anti-slip cover on the laser radar 30 includes but is not limited to a clamping manner, a fastener such as a screw, a pin, and a rivet, and is flexibly adjusted and disposed according to an actual requirement.

In the related technologies, after the laser radar 30 is mounted on the laser radar mounting bracket, the vibration of the laser radar 30 is conducted through the laser radar mounting bracket. After the protective cover 40 is connected to the bracket body 20, it is difficult to avoid any gap, and the bracket body 20 will drive the protective cover 40 to vibrate after vibration, therefore resulting in noise. Accordingly, in this embodiment, a vibration damping pad 50 is provided at a connection portion between the protective cover 40 and the bracket body 20. As such, the protective cover 40 is connected to the bracket body 20 via the vibration damping pad 50, and the contact between the protective cover 40 and the bracket body 20 is not a rigid contact, but a flexible contact. The vibration damping pad 50 serves to reduce vibration, thereby effectively reducing vibration noise.

Referring to FIG. 15, in an embodiment, the vibration damping pad 50 includes but is not limited to a felt or a TPE soft adhesive having a thickness of 1 mm, which can fill a gap, achieve flexible soft contact and absorb vibration energy, thus achieving vibration reduction and noise reduction effect.

Referring to FIG. 14 and FIG. 15, in an embodiment, a connection manner of the protective cover 40 and the bracket body 20 is specifically an engaging connection. A first engaging portion 21 is provided on the bracket body 20, the protective cover 40 is provided with a second engaging portion 41 in cooperation with the first engaging portion 21, and the first engaging portion 21 and the second engaging portion 41 are engaged and connected to each other. The vibration damping pad 50 is provided between first engaging portion 21 and second engaging portion 41.

In the description of the present invention, it should be understood that if the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential", etc. appear, the orientation or position relationship indicated by these terms is based on the orientation or position relationship shown in the accompanying drawings, which is only for the convenience of describing the present invention and simplifying the description, and does not indicate or imply that the device or element referred to must have a specific orientation, be constructed and operated in a specific orientation, and therefore cannot be understood as a limitation on the present invention.

In addition, if the terms "first" and "second" appear, these terms are only used for descriptive purposes and cannot be understood as indicating or implying relative importance or implicitly indicating the number of technical features indicated. Thus, a feature delimited with "first" or "second" may expressly or implicitly include at least one of those features. In the description of the present invention, if the term "a plurality of" appears, the meaning of "a plurality of" is at least two, such as two, three, etc., unless otherwise clearly and specifically defined.

In the present invention, unless otherwise clearly specified and limited, if the terms "mount", "connect together", "connect", "fix", etc. appear, these terms should be understood in a broad sense. For example, it can be a fixed connection, a detachable connection, or an integrated connection; it can be a mechanical connection or an electrical connection; it can be a direct connection or an indirect connection through an intermediate medium, it can be the internal connection of two elements or the interaction relationship between two elements, unless otherwise clearly defined. For ordinary technical people in the art, the specific meaning of the aforementioned terms in the present invention can be understood according to the specific circumstances.

In the present invention, unless otherwise clearly specified and limited, if there is a description that a first feature is "on" or "below" a second feature, etc., or similar description, it may mean that the first feature and second feature are in direct contact, or the first feature and second feature are in indirect contact through an intermediate medium. Also, the first feature is "above", "over" and "on" the second feature may mean that the first feature is directly above or obliquely above the second feature, or simply means that the first feature has a higher level than the second feature. The first feature being "below", "beneath" and "under" the second feature may mean that the first feature is directly or obliquely below the second feature, or simply means that the first feature has a lower level than the second feature.

It should be noted that if an element is referred to as being "fixed to" or "disposed on" another element, it may be directly on the other element or there may be a central element. If an element is considered to be "connected to" another element, it may be directly connected to the other element or there may be a central element at the same time. If present, the terms "vertical", "horizontal", "upper", "lower", "left", "right" and similar expressions used in the present invention are for illustrative purposes only and do not represent the only implementation method.

The technical features of the aforementioned embodiments may be combined arbitrarily. To simplify the description, not all the possible combinations of the technical features in the aforementioned embodiments are described. However, all of the combinations of these technical features should be considered as within the scope of the present invention, as long as such combinations do not contradict with each other.

The above embodiments merely illustrate several embodiments of the present invention, and the description thereof is specific and detailed, but it shall not be constructed as limiting the scope of the disclosure. It should be noted that, for a person of ordinary skill in the art, several variations and improvements may be made without departing from the concept of the present invention, and these are all within the protection scope of the present invention. Therefore, the protection scope of the present invention shall be subject to the appended claims.

## Claims

1. A mounting structure of a laser radar mounting bracket, comprising:
a rigid support portion configured to be provided on a bracket body;
an elastic support portion fixedly connected to the rigid support portion; and
a first connecting member configured to be connected to a laser radar, and the first connecting member being embedded in the elastic support portion.

2. The mounting structure of the laser radar mounting bracket according to claim 1, wherein an outer wall of the first connecting member is provided with a first anti-slip portion, the elastic support portion is arranged surrounding the outer wall of the first connecting member, and an inner wall of the elastic support portion is provided with a second anti-slip portion engaged with the first anti-slip portion.

3. The mounting structure of the laser radar mounting bracket according to claim 1, wherein the first connecting member is provided with a first anti-detachment portion, and the first anti-detachment portion is arranged surrounding an outer wall of the first connecting member.

4. The mounting structure of the laser radar mounting bracket according to claim 1, further comprising a second connecting member, wherein the second connecting member is embedded in the elastic support portion and is spaced apart from the first connecting member, the first connecting member, the second connecting member, and the elastic support portion are integrally injection molded, and the elastic support portion is connected to the rigid support portion via the second connecting member.

5. The mounting structure of the laser radar mounting bracket according to claim 4, wherein the rigid support portion is provided with a first mounting hole and a third connecting member embedded in the first mounting hole, and the third connecting member is detachably connected to the second connecting member;
or, wherein the second connecting member is embedded in the rigid support portion and integrally injection molded with the rigid support portion.

6. The mounting structure of the laser radar mounting bracket according to claim 1, wherein the elastic support portion comprises a first mounting portion and a second mounting portion connected to the first mounting portion, the first connecting member is embedded in the first mounting portion, and the second mounting portion is embedded in the rigid support portion.

7. The mounting structure of the laser radar mounting bracket according to claim 6, wherein an inner wall of the rigid support portion is provided with a positioning plate, the positioning plate is provided with at least one glue injection hole, and the positioning plate is embedded and fixed in the second mounting portion.

8. The mounting structure of the laser radar mounting bracket according to claim 7, wherein a plurality of glue injection holes are provided, and the plurality of glue injection holes are arranged sequentially and spaced apart around a central axis of the rigid support portion.

9. The mounting structure of the laser radar mounting bracket according to claim 7, wherein the positioning plate is provided with a protrusion portion, an outer wall of the protrusion portion is provided with a third anti-slip portion, the protrusion portion is embedded in the second mounting portion, and the second mounting portion is provided with a fourth anti-slip portion corresponding to the third anti-slip portion.

10. The mounting structure of the laser radar mounting bracket according to claim 6, wherein the elastic support portion, the first connecting member, and the rigid support portion are integrally injection molded.

11. The mounting structure of the laser radar mounting bracket according to claim 6, wherein an outer wall of the second mounting portion is provided with a fifth anti-slip portion, and an inner wall of the rigid support portion is provided with a sixth anti-slip portion corresponding to the fifth anti-slip portion.

12. The mounting structure of the laser radar mounting bracket according to any one of claims 1 to 11, wherein the elastic support portion is made of natural rubber, and a hardness of the natural rubber is in a range from 55HRC to 70HRC;
and/or, the rigid support portion is made of a material capable of avoiding a modal frequency of 200Hz to 400Hz.

13. A laser radar mounting bracket, comprising:
at least one mounting structure according to any one of claims 1 to 12; and
the bracket body, wherein the rigid support portion is provided on the bracket body.

14. A vehicle, comprising:
the laser radar mounting bracket according to claim 12; and
a laser radar and a window glass,
wherein the laser radar mounting bracket is mounted on an inner side surface of the window glass, the laser radar is mounted on the laser radar mounting bracket, and the laser radar is connected to the mounting structure.

15. The vehicle according to claim 14, wherein at least three mounting structures are provided, the laser radar is connected to each of the mounting structures, respectively, and an interval space is provided between the laser radar and a region of the laser radar mounting bracket other than the mounting structure.

16. The vehicle according to claim 14, wherein the laser radar comprises an abutting portion and a locking member configured to lock and fix the abutting portion to the first connecting member.

17. The vehicle according to claim 16, wherein the abutting portion is provided on a side portion of the laser radar, the abutting portion comprises an abutting bottom wall, the abutting bottom wall is provided with a second mounting hole, the locking member extends through the second mounting hole and is connected to the first connecting member, and a top end surface of the first connecting member is attached to the abutting bottom wall.

18. The vehicle according to claim 17, wherein the abutting portion further comprises an abutting side wall connected to the abutting bottom wall, the abutting side wall is provided with at least one first limiting member and at least one second limiting portion, and the first limiting member and the second limiting portion abut against an outer wall of the elastic support portion, respectively.

19. The vehicle according to claim 18, wherein the first limiting member and the second limiting portion are limiting ribs, limiting protrusions, or limiting blocks provided on the abutting side wall.

20. The vehicle according to claim 18, wherein a plurality of abutting portions are disposed on opposite sides of the laser radar, respectively, at least two abutting portions are located on one side of the laser radar, and at least one abutting portion is located on another side of the laser radar.

21. The vehicle according to any one of claims 14 to 20, further comprising a protective cover provided on the bracket body, wherein the anti-slip cover is provided outside the laser radar, and a vibration damping pad is provided at a connection portion between the protective cover and the bracket body.
